# EUROPEAN PATENT APPLICATION

(11) **EP 0 955 654 A2**
(43) Date of publication of application: **10.11.1999**
(21) Application number: 99108818.8
(22) Date of filing: 04.05.1999
(51) Int. Cl.: H01H 13/70, H01H 9/54

(54) **Remote-programmable computerised microswitch control panel**

(30) Priority: 05.05.1998 IT MI980973
(71) Applicant: Ancona, Lorenzo, 20100 Milan (IT); Ancona, Cristiano, 20100 Milan (IT)
(72) Inventor: Ancona, Lorenzo, 20100 Milan (IT); Ancona, Cristiano, 20100 Milan (IT)
(74) Representative: Coloberti, Luigi

(57) **Abstract**

A computerised microswitch control panel (10) provided with microswitches (17) and a microprocessor (26) with functions which can be programmed and reprogrammed by remote. The microswitch panel (10) comprises a flat shaped watertight casing having a bottom wall (11), side walls (12) and a front wall (13) defining a closed space, for housing microswitches (17) connected to the inputs/outputs (I/O) of the microprocessor (26). The microswitches (17) can be actuated at elastically yielding marked areas (15) of the front wall (13) to control actuation devices positioned in several points of an electrical system; an AWG26 three-lead cable (24) for very low voltage, in addition to supplying power to the control panel (10), allows the receiving and transmitting of control data. The microprocessor (26) may be programmed and reprogrammed to perform the functions of the microswitches (17) by remote control, both as addressing of each of the microswitch devices (17) and as variation of their relay functions. The control panel can be provided with a display to reveal the performed commands, as well as with a detection cell (22) for remote control of the microswitch functions. The control panel (10) is suitable for civil and industrial electrical engineering systems with very low voltage control devices and can be connected in parallel to an unlimited number of similar control panels (10) up to 256 electrical devices with 8 relays for a total of 2048 actuations and/or functions which can be assigned to the various microswitches (17).

## Description

### BACKGROUND TO THE INVENTION

The present invention relates to a computerised control panel provided with electric microswitch actuators, whose functions can be programmed and reprogrammed by remote control, which are connected by an AWG26 three-lead cable, to actuator devices for both civil and industrial engineering systems at very low voltage (SELV - security electrical low voltage), by means of which it is possible to introduce new levels of operability, practicality of use, appearance and management of an electrical system, which cannot be achieved with conventional systems.

The computerised control panel, according to the present invention, is particularly suitable for use in the refurbishment of property, or in designing new property by traditional or prefabrication building techniques. It allows for a drastic reduction in the masonry work which had hitherto been indispensable for installing a new electrical system, even allowing total elimination, for the control parts, of the traditional embedded boxes, pipes and relevant electrical devices.

The computerised control panel according to the present invention is made totally waterproof, and is therefore suitable for use also in wet or outside areas. It can also be fitted with any number of electric microswitch devices, preferably with 2, 4 or 8 buttons, with or without a LED for displaying each individual performed command, as well as with or without an infrared or black light detection cell for a remote control of the functions of the several microswitch actuators.

The operational functions of the electric microswitch actuators, via a set of memories integrated in a microprocessor, and a three-prewired cable for connection to actuation devices which are an integral part of the electrical system, can be programmed and reprogrammed individually both for a high number of addressings of actuations, and for changing the functions of each of their individual relays, according to the requirements of use and needs.

Programming and reprogramming of each individual microswitch actuator of each individual control panel can be performed by a simple switch device connected to the same three-wire cable, or via an interface by means of a personal computer.

### BRIEF DESCRIPTION OF THE INVENTION

According to the invention, a computerised microswitch control panel has been provided comprising:
- a substantially flat and watertight casing of relatively reduced overall dimensions and thickness having bottom and front walls, and peripherally arranged side walls to define a closed space, said front wall being provided with elastically yielding zones;
- a plurality of microswitch actuators inside the closed space of the control panel to be manually actuated by pressing on the elastically yielding zones of the front wall;
- a microprocessor operatively connected to the microswitch actuators, said microprocessor being remote programmable with functions related to each of said microswitch actuators; and
- a prewired power supply cable, having a data receiving and transmitting wire connected to serial input and output of the microprocessor.

More precisely, according to a first aspect of the invention a control panel has been provided, with electric microswitch actuators to perform programmed functions for remote controllable electric devices, said control panel comprising:
- a watertight casing having a substantially flat shape of reduced thickness, said casing comprising a bottom base, peripherally arranged side walls and a front wall parallelly extending to the bottom base, said front wall being provided with elastically yielding zones;
- a plurality of electric microswitch actuators inside the casing, the microswitch actuators being manually actuable by pressing marked areas of the elastically yielding zones of the front wall;
- a programmable microprocessor in the casing having input/output ports operatively connected to the microswitch devices, said microprocessor being programmable to perform the operative functions of the microswitch actuators;
- panel identifying means for the composition and storing in a memory of the microprocessor a serial number for identifying the control panel, for example consisting of a set of electrical tracks connected to the ground and to respective input/output ports of the microprocessor and tracks interruption means to perform a binary composition of the serial identification number;
- a prewired three-lead cable, for supplying power to the electrical components inside the panels, respectively for serial receiving and transmission of data between the control panel and switch devices or a personal computer and vice versa, relating for example to identification of the same, or again between the control panel and relay actuation devices or vice versa, both for addressing and changing of the functions of each individual relay.

According to another aspect of the invention, means for displaying an indication of a performed control function can be connected to all or to part of the microswitch actuators.

According to another aspect of the invention, the control panel can be provided with an infrared or black light detection cell for remote control of the microswitch actuators.

The control panel according to the invention can have any flat configuration or shape; it preferably has a rectangular shape and dimensions which vary according to the number of the microswitch actuators contained.

In general the control panel can have relatively small dimensions, namely a length of between 30 and 170 mm, a width of between 30 and 60 mm and an extremely small thickness between 3 and 15 mm which make the overall dimensions of the panel extremely small.

### BRIEF DESCRIPTION OF THE DRAWINGS

These and further features of the computerised control panel, according to the invention, will be made clearer by the following description with reference to the accompanying drawings, in which:
- Fig. 1 is a perspective view of a control panel according to the invention;
- Fig. 2 is an enlarged longitudinal sectional view of part of the panel of Figure 1, seen along line 2-2;
- Fig. 3 is a view of the rear side of the panel;
- Fig. 4 is an enlarged detail to illustrate a second embodiment;
- Fig. 5 shows the overall wiring diagram for connection of the various components inside a control panel comprising eight actuators.

### DETAILED DESCRIPTION OF THE INVENTION

A preferred embodiment of a computerised control switch panel according to the invention is now described, purely by way of an explanation and without thereby forming a limitation as regards shape, dimensions and features of the panel, as well as the same electrical control circuit.

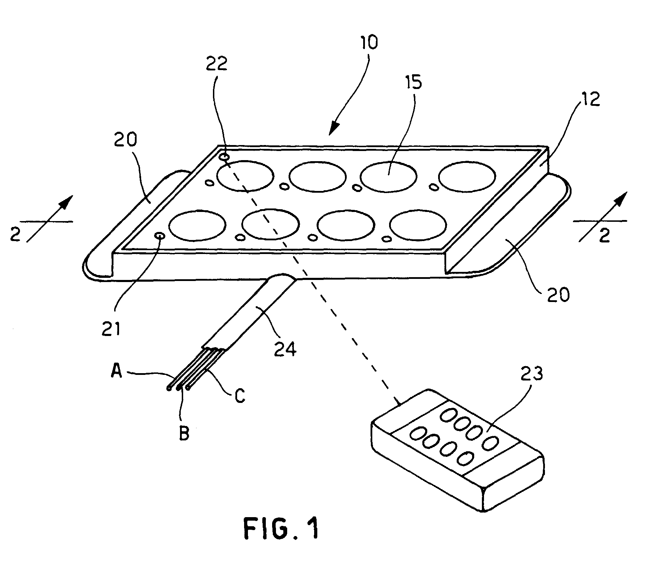

As shown in Figure 1, the panel comprises a body 10 having a substantially rectangular shape, formed by a watertight casing in a plastic material having a bottom wall 11 defining a support base, peripheral walls 12 and a front wall 13 provided with a plurality of holes 14 at marked zones 15 on an elastically yielding or flexible membrane 16 which covers the wall 13 for the actuation of corresponding electric microswitch actuators schematically denoted by 17 inside the closed space of the panel 10.

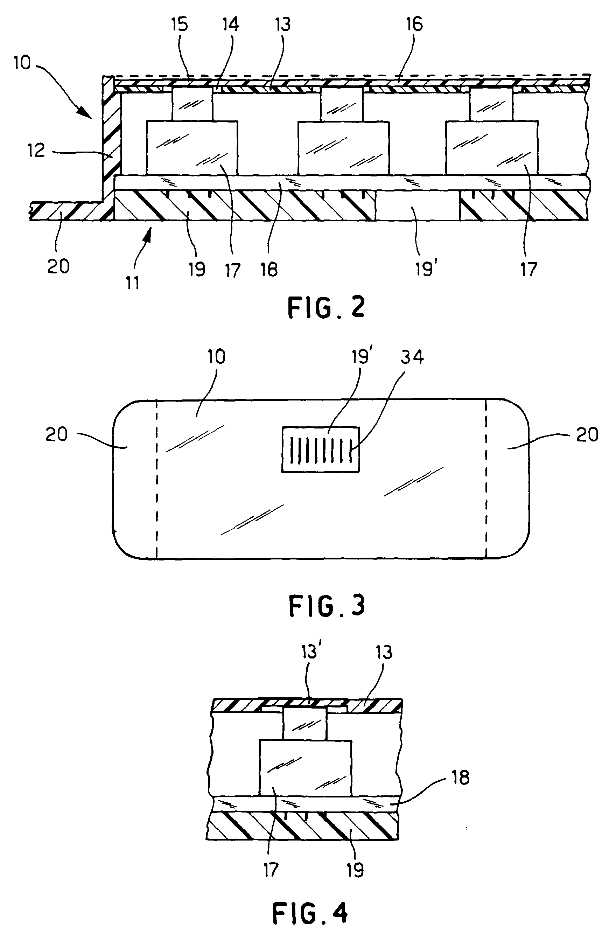

Reference 18 in Figure 2 denotes the printed circuit of the panel, while 19 denotes a sealing layer, formed for example by Araldite or another suitable material, on the rear side of the bottom wall. The panel 10 can also be provided with side fins 20 at the bottom wall 11, for applying a layer of self-adhesive material.

On the front wall of the panel, at the marked zones 15 for control of each electric microswitch actuator 17, a LED 21 can optionally be provided in order to give a light indication of the performed command, as explained further on. The panel 10 can also be provided with a detection cell 22 for a remote control 23 as schematically indicated in Figure 1.

The panel is also prewired with a cable 24 having three leads A, B and C for connection, in parallel to other identical panels to the various actuation boards of a remote electrical system.

According to the embodiment of Figure 4, the front wall 13, instead of the holes 14 and membrane 16, can have marked zones 13' of reduced thickness, elastically yieldable, at each actuator 17.

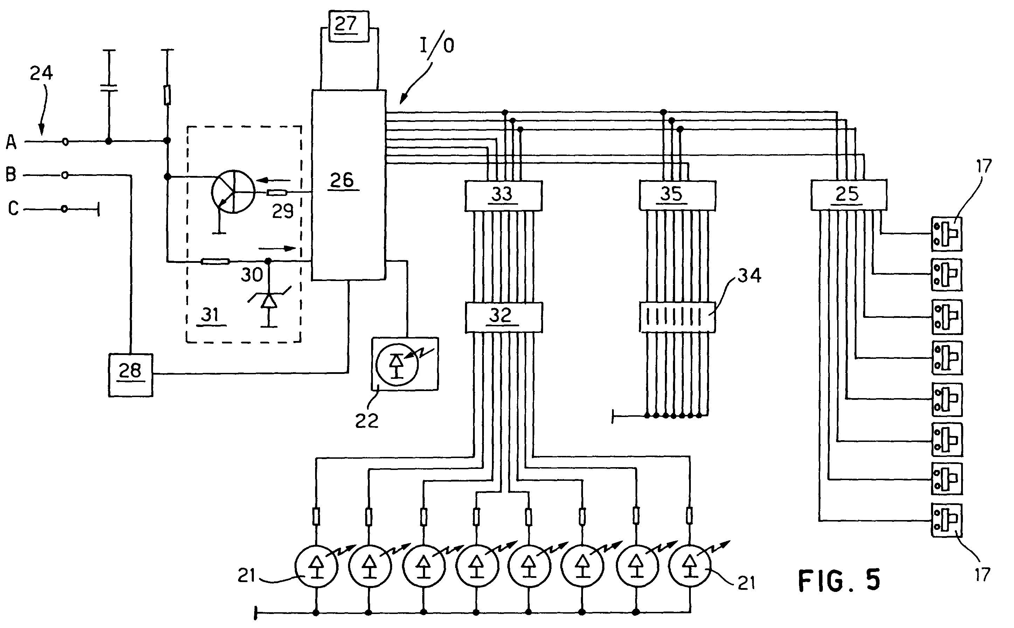

With reference to Figure 5 we will now describe the electrical diagram of the printed circuit for a control panel comprising eight control microswitch actuators, without detriment to the fact that this specific circuit configuration is given purely by way of a non-limiting example.

As can be seen in the example of Figure 5, eight microswitch actuators 17 are connected, via a multiplexer circuit 25, to the inputs/outputs ports I/O of a microprocessor 26, for example to the microprocessor MC68HC805K3 produced by Motorola, for the programming and management of the various functions and/or of the actuations which can be assigned to the various microswitch actuators 17 of the control panel. Reference number 27 in Figure 5 also generically denotes the clock circuit of the microprocessor 26, while reference 28 denotes the stabilisation circuit at 5 volts, corresponding to the working voltage of the electrical components of the control panel.

It can also be noted that the serial input and output 29 and 30, for sending to and receiving data from the remote electrical system connected to the control panel, are connected to the lead A of the cable 24, via a resistor and a transistor which form the connection interface, denoted schematically by 31.

In Figure 5, reference 21 once again denotes a set of eight LEDs for displaying the commands which have been performed by the respective electric microswitch actuators 17. Optionally, these LEDs 21 for displaying the performed command can be provided on the front wall at each zone 15 for actuation of the microswitch actuators, or could even be omitted.

Similarly reference number 22 denotes the detection cell for the remote control 23 which could be provided in combination with or in place of the same microswitch actuators 17.

More specifically the various LEDs 21 for display of the command are connected to the input/output port I/O of the microprocessor 26, via an interface 32 and a corresponding multiplexer 33.

Finally, in the same figure, reference number 34 denotes a system of electrical tracks connected to the ground and to the inputs/outputs I/O of the microprocessor 26 via a multiplexer 35. The tracks 34 can be interrupted in order to compose, in a binary form, a serial number which can be assigned to each control panel 10 for identification, programming and/or reprogramming via a switch device which can be connected to the three wires cable 24, or by means of a personal computer.

As shown in Figure 3, the tracks 34 are accessible from the bottom wall of the control panel, through an opening 19' in the layer of Araldite 19 or another waterproofing material which seals the closed space for containing the printed circuit 18 and the various electrical components.

From what has been said and described, it will therefore be understood that a computerised control panel has been provided, comprising electric microswitch actuators having functions which can be programmed and reprogrammed by remote control.

The control panel can have any required flat shape, maintaining the thicknesses and the overall dimensions within extremely reduced values.

In the example shown, the panel has a rectangular shape, preferably with dimensions of 7 x 45 x 75 mm or 7 x 45 x 100 mm. However the dimensions of the shape can be different from those indicated above. In general the length of the panel can be between 30 and 170 mm, its width between 30 and 60 mm, while the thickness can be between 3 and 15 mm.

The intent in any case is that the shapes and dimensions indicated above are given purely by way of an example and that in general the invention is aimed at a computerised control panel comprising electric microswitch actuators, which can be programmed and reprogrammed by remote control via a simple switch device or by means of a personal computer to perform control functions of actuating devices of civil and industrial electrical systems, wherein the microswitch actuators, with the programming microprocessor, are prewired to a line for receiving and transmitting data, and wherein the entire assembly is housed in a watertight casing of a very flat shape, having elastically yielding marked zones, on the front face in the actuation points of the various microswitch actuators.

## Claims

1. A programmable microswitch control panel comprising a substantially flat and watertight casing (10) defining a closed space, said casing (10) having a front wall (13) provided with elastically yielding marked zones (15); a plurality of microswitch actuators (17) in the closed space of the casing (10) positioned in correspondence of said elastically yielding marked zones (15) of the front wall (13); a programmable microprocessor (26) programmed with operative functions to be assigned to each one of the microswitch actuators (17); and a prewired cable (24) for power supply to the control panel, said cable (24) having one data receiving and transmitting lead (A) connected to serial input and output ports (29, 30) of the microprocessor (26).

2. The programmable control panel according to claim 1, characterised by comprising:
- a watertight casing (10) having a bottom wall (14) peripheral walls (12) and a front wall (13) parallelly extending to the bottom wall (11);
- a plurality of electric microswitch actuators (12) inside said casing (10), which can be manually actuated by pressing the respective marked zones (15) of the front wall (13);
- a microprocessor (26) having input/output ports (I/O) operationally connected to said microswitch actuators (17);
- panel identification means (34) for the composition of an identification serial number for the control panel (10);
- said prewired cable (24), connected to the serial input and output (29, 30) of the microprocessor (26) being provided for serial transmission and receiving of identification data of the control panel (10) and respectively for programming of the addresses data of actuation of relay devices connected to the control panel (10) and/or functions to be assigned to each individual relay.

3. The programmable control panel according to claim 1, characterised by comprising display means (21) for displaying a performed command of the microswitch actuators (17), connected to respective input/output ports (I/O) of the microprocessor (26).

4. The programmable control panel according to claim 3, characterised in that the display means (21) are provided on the front wall of the casing (10), near to each elastically yielding marked zone (15).

5. The programmable control panel according to claim 1, characterised by comprising a detection cell (22) for sensing a remote control (23), connected to a control input of the microprocessor (26).

6. The programmable control panel according to claim 2, characterised in that the panel identification means (30) for composing the serial identification number are provided by a series of electrical tracks connected between the ground and input/output ports (I/O) of the microprocessor (26) and means for interruption of each single track accessible from the bottom wall (11) of the control panel.

7. The programmable control panel according to any one of the previous claims, characterised in that said casing has lateral fins for applying a layer of self-adhesive material, in the plane of said rear support base.

8. The programmable control panel according to any one of the previous claims, characterised in that said casing (10) has a flat rectangular shape.

9. The programmable control panel according to claim 8, characterised in that said flat rectangular casing (10) has a length of between 30 and 170 mm, a width of between 30 and 60 mm, and a reduced thickness of between 3 and 15 mm.

10. The programmable control panel according to claim 9, characterised in that the flat rectangular casing (10) has overall dimensions comprised between 7 x 45 x 100 mm and 7 x 45 x 75 mm.

11. An assembly of computerised electric microswitch actuators (17), the functions of which can be programmed and reprogrammed by remote control, by means of a computerised device via simple switch devices or by a personal computer to perform control functions of actuation devices of an electrical system, which are connected to the input/output ports (I/O) of a microprocessor (26) via a prewired line (24) for data transmission; a means (34) for composing a serial number for identification of the assembly connected to the port (I/O) of the microprocessor (26), said assembly of computerised microswitch actuators (17) being closed in a watertight casing (10) having a substantially flat shape, comprising a front wall (13) having a flexible membrane (16) or having elastically yielding marked zones (15) for the actuation of microswitch actuators (17).

12. The assembly according to claim 11, comprising means (21) for displaying a signal of performed command, for at least part of the microswitch actuators (17).

13. The assembly according to claim 11, comprising a detection means (22) for remote control suitable for programming the functions of the individual microswitch actuators (17).

14. The assembly according to claim 11, wherein the casing (10) is in the form of a rectangular housing, provided with peripheral fins (20), defining a resting rear surface.
